# EUROPEAN PATENT APPLICATION

(11) **EP 3 806 350 A1**
(43) Date of publication of application: **14.04.2021**
(21) Application number: 18942428.6
(22) Date of filing: 04.12.2018
(51) Int. Cl.: H04B 7/185

(54) **LOAD CONTROL METHOD, MOBILE PLATFORM, AND COMPUTER READABLE STORAGE MEDIUM**

(71) Applicant: SZ DJI Technology Co., Ltd., Shenzhen, Guangdong 518057 (CN)
(72) Inventor: HE, Changxin, Shenzhen, Guangdong 518057 (CN); YANG, Yong, Shenzhen, Guangdong 518057 (CN)
(74) Representative: Goddar, Heinz J.
(86) International application number: PCT/CN2018/119225
(87) International publication number: WO 2020/113436

(57) **Abstract**

Embodiments of the present invention provide a load control method, a mobile platform, and a computer-readable storage medium include receiving a control instruction sent by a control device corresponding to a mobile platform, where the control instruction includes original identification information of a load; determining, based on the original identification information of the load, a hardware port connected to the load; modifying, based on the determined hardware port connected to the load, the original identification information of the load in the control instruction to target identification information identifiable by the hardware port; and sending the modified control instruction to the load through the hardware port. For a plurality of loads carried by the mobile platform, real-time, stable, and reliable switching and control can be implemented, and the scalability of the mobile platform is improved. If a device needs to be added at a hardware port or a hardware port needs to be added, only original identification information of a load and target identification information identifiable by the hardware port needs to be configured. Therefore, software changes are reduced, an increase of a load quantity does not cause instability or brings about limitations, and development and maintenance costs are reduced.

## Description

### TECHNICAL FIELD

Embodiments of the present invention relate to the field of unmanned aerial vehicles, and in particular, to a load control method, a movable platform, and a computer-readable storage medium.

### BACKGROUND

In the prior art, an unmanned aerial vehicle carries a load, and the load may include at least one of the following devices: a gimbal, a camera, and a gimbal electronic speed control.

To meet application requirements, the unmanned aerial vehicle may need to carry a plurality of loads, where the loads are connected to the unmanned aerial vehicle by using different hardware ports, and the unmanned aerial vehicle may distinguish the plurality of loads by using different hardware ports. Therefore, the mounting positions of the plurality of loads are limited. When the mounting positions of the plurality of loads are changed, the unmanned aerial vehicle may be unable to correctly distinguish different loads, and the scalability of the unmanned aerial vehicle is limited.

### SUMMARY OF INVENTION

Embodiments of the present invention provide a load control method, a mobile platform, and a computer-readable storage medium, to realize the real-time, stable, and reliable switching and control of the mobile platform and multiple loads carried thereon, and improve the scalability of the mobile platform.

The first aspect of the embodiments of the present invention provides a load control method applied to a mobile platform having a plurality of hardware ports for connecting to loads. The method comprises:
receiving a control instruction sent by a control device corresponding to the mobile platform, wherein the control instruction includes original identification information of a load;
determining, based on the original identification information of the load, a hardware port connected to the load;
modifying, based on the determined hardware port connected to the load, the original identification information of the load in the control instruction to target identification information identifiable by the hardware port; and
sending the modified control instruction to the load through the hardware port.

The second aspect of the embodiments of the present invention provides a mobile platform comprising:
a body;
a power system mounted in the body and configured to supply power;
a plurality of hardware ports, wherein the hardware ports are configured to connect to loads;
a communication interface configured to communicate with a control device corresponding to the mobile platform; and
one or more processors, configured to:
   receive, through the communication interface, a control instruction sent by the control device corresponding to the mobile platform, wherein the control instruction includes original identification information of a load;
   determine, based on the original identification information of the load, a hardware port connected to the load;
   modify the original identification information of the load in the control instruction to target identification information identifiable by the hardware port; and
   send the modified control instruction to the load through the hardware port.

The third aspect of the embodiments of the present invention provides a computer-readable storage medium, the computer-readable storage medium stores a computer program, and the computer program is executed by a processor to implement the method according to the first aspect.

The load control method, mobile platform, and computer-readable storage media provided in the embodiments of the present invention include receiving a control instruction sent by a control device corresponding to the mobile platform, where the control instruction includes original identification information of a load; determining, based on the original identification information of the load, a hardware port connected to the load; modifying, based on the determined hardware port connected to the load, the original identification information of the load in the control instruction to target identification information identifiable by the hardware port; and sending the modified control instruction to the load through the hardware port. In embodiments of the present invention, for a plurality of loads carried by the mobile platform, real-time, stable, and reliable switching and control can be realized and the scalability of the mobile platform is improved. Subsequently, if a device needs to be added at a hardware port or a hardware port needs to be directly added, only original identification information of a load and target identification information identifiable by the hardware port needs to be configured. Therefore, software changes are reduced, an increase of the quantity of loads does not cause instability or brings about limitations, and development and maintenance costs are reduced.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show some embodiments of the present invention, and persons of ordinary skill in the art may still derive other drawings from these accompanying drawings without creative efforts.
FIG. 1 is a flowchart of a load control method according to an embodiment of the present invention;
FIG. 2 is a flowchart of a load control method according to another embodiment of the present invention;
FIG. 3 is a flowchart of a load control method according to another embodiment of the present invention;
FIG. 4 is a structural diagram of a mobile platform according to an embodiment of the present invention; and
FIG. 5 is a structural diagram of a mobile platform according to another embodiment of the present invention.

### DETAILED DESCRIPTION OF THE EMBODIMENTS

The following clearly describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

It should be noted that, when a component is described as "fixed" to another component, the component may be directly located on another component, or an intermediate component may exist therebetween. When a component is considered as "connected" to another component, the component may be directly connected to another element, or an intermediate element may exist therebetween.

Unless otherwise defined, meanings of all technical and scientific terms used in this specification are the same as those generally understood by persons skilled in the art of the present invention. The terms used in this specification of the present invention herein are used only to describe specific embodiments, and not intended to limit the present invention. The term "and/or" used in this specification includes any or all possible combinations of one or more associated listed items.

The following describes in detail some implementations of the present invention with reference to the accompanying drawings. Under a condition that no conflict occurs, the following embodiments and features in the embodiments may be mutually combined.

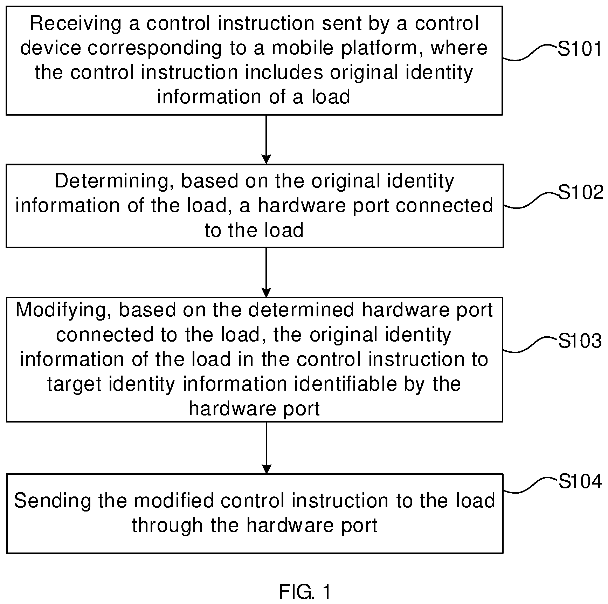

An embodiment of the present invention provides a load control method. FIG. 1 is a flowchart of a load control method according to an embodiment of the present invention. As shown in FIG. 1, the method in this embodiment is applied to a mobile platform. The mobile platform may include but is not limited to an unmanned aerial vehicle. The mobile platform includes a plurality of hardware ports, and the hardware ports are used to connect to loads. A load may include but is not limited to at least one of the following devices: a gimbal, a photographing device, and a gimbal electronic speed control. The method in this embodiment may be performed by the mobile platform. The method may include the following steps.

Step S101: receiving a control instruction sent by a control device corresponding to the mobile platform, where the control instruction includes original identification information of a load.

In this embodiment, the control device corresponding to the mobile platform may be a remote control configured to control the mobile platform or may be a terrestrial maintenance base station for the mobile platform. In addition, in some embodiments, the control device may also be at least one of the following: a headset display (VR glasses, a VR helmet, or the like), a mobile phone, a smart band, a tablet, or the like.

In this embodiment, the mobile platform may receive, through a communications apparatus, a control instruction sent by the control device, where the control instruction includes original identification information of a load, and the original identification information of the load is relative to the following modified target identification information. Original identification information of loads is used to distinguish control instructions sent to the mobile platform when the control device needs to control different target loads. For example, original identification information included in a control instruction sent to a first load is different from original identification information included in a control instruction sent to a second load. The control instruction in this embodiment includes but is not limited to a control instruction for gimbal posture, a control instruction for gimbal electronic speed control, photographing device parameter settings, an instruction for obtaining image data of a photographing device, and the like. The communications apparatus of the mobile platform in this embodiment may include a wireless communications apparatus or may include a wired communications apparatus.

Step S102: determining, based on the original identification information of the load, a hardware port connected to the load.

In this embodiment, because the mobile platform includes a plurality of hardware ports, and different hardware ports may be connected to different loads, to enable the control instruction sent by the control device to arrive at the corresponding load, the hardware port connected to the load needs to be determined based on the original identification information of the load included in the control instruction. In this embodiment, the mobile platform may obtain in advance the correspondence between the original identification information of the load and the hardware port connected to the load, and therefore can determine, based on the correspondence, the hardware port connected to the load.

Step S103: modifying, based on the determined hardware port connected to the load, the original identification information of the load in the control instruction to target identification information identifiable by the hardware port.

In this embodiment, the same load may be able to connect to different hardware ports. Therefore, to enable the load to identify the control instruction of the control device and avoid that when the same load is connected to different hardware ports, the load needs to adapt to control instructions including original identification information of different loads. Therefore, target identification information of data transmitted between the load and the hardware port is preconfigured. To be specific, the load can only identify an instruction including the target identification information. For example, a gimbal can only identify a control instruction including first target identification information, a photographing device can only identify a control instruction including second target identification information, and a gimbal electronic speed control can only identify a control instruction including third target identification information.

In this embodiment, after the hardware port connected to the load is determined based on the original identification information of the load in the control instruction, the original identification information of the load in the control instruction may be modified to the target identification information identifiable by the hardware port.

For example, if the control device wants to control a first gimbal at a first hardware port, the control instruction includes original identification information "0101". In this case, the mobile platform determines, based on the original identification information "0101", that the first load is connected to the first hardware port, and then modifies the original identification information "0101" in the control instruction to target identification information "0001" identifiable by the hardware port, and then may send, through the first hardware port, the modified control instruction to the load connected to the first hardware port. After receiving the modified control instruction, the first gimbal may execute the modified control instruction based on the target identification information "0001". If the control device wants to control a second gimbal at a second hardware port, the control instruction includes original identification information "0201". In this case, the mobile platform determines, based on the original identification information "0201", that the second load is connected to the second hardware port, and then modifies the original identification information "0201" in the control instruction to target identification information "0001" identifiable by the hardware port, and then may send, through the second hardware port, the modified control instruction to the load connected to the second hardware port. After receiving the modified control instruction, the second gimbal may execute the modified control instruction based on the target identification information "0001". Control processes of the photographing device and the gimbal electronic speed control are the same as above and are not described again herein.

Step S104: sending the modified control instruction to the load through the hardware port.

In this embodiment, if the load receives the modified control instruction, a corresponding operation may be performed based on the control instruction, so that the load is controlled.

The load control method provided in this embodiment includes: receiving a control instruction sent by a control device corresponding to the mobile platform, where the control instruction includes original identification information of a load; determining, based on the original identification information of the load, a hardware port connected to the load; modifying, based on the determined hardware port connected to the load, the original identification information of the load in the control instruction to target identification information identifiable by the hardware port; and sending the modified control instruction to the load through the hardware port. In this embodiment, for a plurality of loads carried by the mobile platform, real-time, stable, and reliable switching and control can be realized, and the scalability of the mobile platform is improved. If a device needs to be added at a hardware port or a hardware port needs to be directly added later on, only original identification information of a load and target identification information identifiable by the hardware port needs to be configured. Therefore, software changes are reduced, an increase of a load quantity does not cause instability or brings about limitations, and development and maintenance costs are reduced.

On the basis of any one of the foregoing embodiments, if the control device wants to control linkage of the plurality of loads, the control instruction sent to the mobile platform may include original identification information of the plurality of loads; and the mobile platform determines, based on the original identification information of the plurality of loads, a hardware port connected to each load, modifies original identification information of each load in the control instruction to target identification information identifiable by each hardware port, and then sends the modified control instruction to the load through each hardware port. In this way, the linkage of the plurality of loads is achieved.

On the basis of any one of the foregoing embodiments, the load includes at least one of the following devices: a gimbal, a photographing device, and a gimbal electronic speed control.

The hardware port is used to connect to the load, that is, the hardware port is communicatively connected to each of the at least one device.

Specifically, if the first load connected to the first hardware port includes a gimbal and a photographing device, the first hardware port is communicatively connected to the gimbal and the photographing device in the first load, respectively; if the second load connected to the second hardware port includes a gimbal, a photographing device, and a gimbal electronic speed control, the second hardware port is communicatively connected to the gimbal, the photographing device, and the gimbal electronic speed control in the second load, respectively. In this embodiment, the hardware port may be communicatively connected to each device through a CAN (Controller Area Network) bus. Certainly, the hardware port may be connected in other communication connection manners. For example, the first hardware port is connected to each device in the first load through a first CAN bus, and the second hardware port is connected to each device in the second load through a second CAN bus.

On the basis of any one of the foregoing embodiments, a link identification of a communication link between the hardware port and each device is different from a link identification of a communication link between the hardware port and another device.

In this embodiment, because the same hardware port is connected to different devices, to avoid data confusion, different link identifications are configured for the communication links between the hardware port and the devices. For example, if the hardware port may be communicatively connected to each device through a CAN bus, a CAN_ID is configured for each link. Therefore, the control instruction can arrive at a corresponding device quickly and accurately. In addition, a data sender may be checked based on the CAN_ID or another check field, to ensure the security and reliability of transmitted data.

On the basis of any one of the foregoing embodiments, the devices of the same type have the same target identification information. For example, target identification information of the gimbal may be "0001"; target identification information of the photographing device may be "0002"; and target identification information of the gimbal electronic speed control may be "0003". When a hardware port needs to be added, target identification information of each device does not need to be reconfigured. Therefore, development and maintenance costs are reduced.

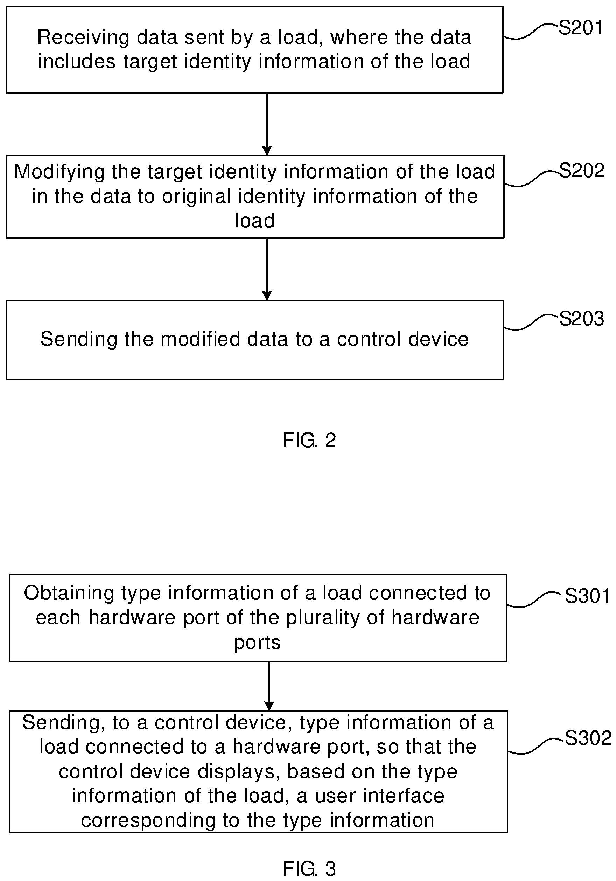

FIG. 2 is a flowchart of a load control method according to another embodiment of the present invention. As shown in FIG. 2, on the basis of the embodiment shown in FIG. 1, the method in this embodiment may include the following steps.

Step S201: receiving data sent by the load, where the data includes the target identification information of the load.

In this embodiment, when the load needs to send the data to the control device, the data carries the target identification information of the load and is sent to the mobile platform through the hardware port connected to the load.

Step S202: modifying the target identification information of the load in the data to the original identification information of the load.

In this embodiment, because the data sent by the load carries only the target identification information, if the data is directly sent to the control device, the control device cannot know which load sends the data. Therefore, the mobile platform needs to modify the target identification information of the load in the data to the original identification information of the load that can be identified by the control device. In this embodiment, the mobile platform receives, through the hardware port, the data sent by the load. Therefore, the target identification information of the load may be modified to the original identification information of the load based on the hardware port receiving the data.

Step S203: sending the modified data to the control device.

In this embodiment, after the data is modified, the mobile platform sends the modified data to the control device through the communications apparatus. In this way, the data is sent by the load to the control device, and the control device can identify, based on the original identification information of the load in real time, stably, and reliably, the load sending the data.

FIG. 3 is a flowchart of a load control method according to another embodiment of the present invention. As shown in FIG. 2, on the basis of the embodiment shown in FIG. 1, before receiving a control instruction sent by a control device corresponding to the mobile platform, the method in this embodiment may include the following steps.

Step S301: obtaining type information of a load connected to each hardware port of the plurality of hardware ports.

In this embodiment, when the load is connected to the mobile platform, that is, the load is connected to the hardware port of the mobile platform, the type information of the load connected to each hardware port of the plurality of hardware ports may be first obtained. The mobile platform may send a load type request to each hardware port. After receiving the load type request, the load feeds back its load type information to the mobile platform through the hardware port. In this way, the mobile platform obtains a type of the load connected to each hardware port. In addition, the load at each hardware port may actively send the type information to the mobile platform. For example, the load is connected to the hardware port, and may actively send the type information to the mobile platform after power-on. Further, before obtaining the load type information, the mobile platform may further detect whether the load is connected successfully.

Step S302: sending the type information of the load connected to the hardware port to the control device, so that the control device displays, based on the type information of the load, a user interface corresponding to the type information.

In this embodiment, after obtaining the type information of the load connected to the hardware port, the mobile platform sends the type information of the load to the control device. Because function control and buttons of different loads are different, the control device may perform switching and adaptation on user interfaces based on the type information of the load. For example, a photographing device of a first type has a tap zoom function, but does not have a picture fusion function; and a photographing device of a second type has a picture fusion function, but does not have a tap zoom function. Therefore, user interfaces corresponding to the two load types are different. Further, the control device may configure different user interfaces based on different hardware ports and may control each device at a corresponding hardware port on each user interface. For example, when a user performs an operation on a first user interface, a control instruction for a device at the first port is sent to the mobile platform and carries corresponding original identification information.

On the basis of the foregoing embodiment, the original identification information of the load is used to identify the type information of the load.

In this embodiment, the original identification information of the load is used to distinguish the type information of the load. For example, original identification information of a gimbal of a first type is "0101", and original identification information of a gimbal of a second type is "0102". When obtaining the type information of the load, the mobile platform may configure the original identification information of the load based on different type information.

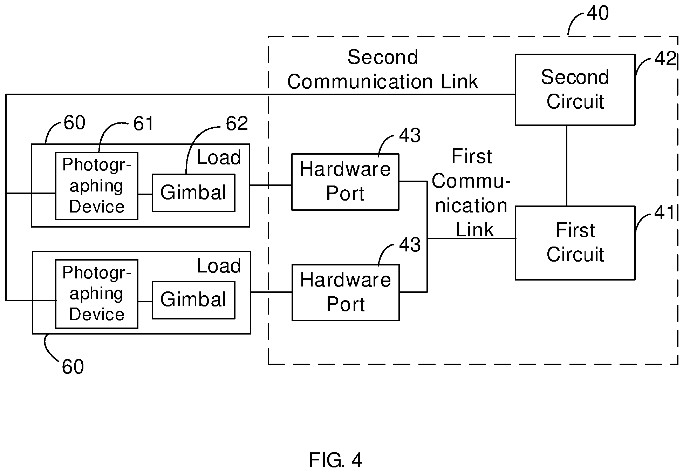

FIG. 4 is a structural diagram of a mobile platform according to an embodiment of the present invention. As shown in FIG. 4, on the basis of the foregoing embodiment, the mobile platform 40 includes a first control circuit 41 and a second control circuit 42, and the first control circuit 41 is communicatively connected to the second control circuit 42; the first control circuit 41 is communicatively connected to the plurality of hardware ports 43, forming a first communication link; and the second control circuit 42 is configured to communicatively connect to the photographing device 61, forming a second communication link.

In this embodiment, the second communication link may be a USB interface communication link. Because the second communication link is connected to the photographing device 61, the photographing device 61 may transmit image data and download photographing device upgrade data through the second communication link. To be specific, the second communication link is configured to transmit at least one of the following data: image data and photographing device upgrade data. In addition, in this embodiment, the first communication link may be a serial port communication link. The first communication link may be configured to transmit at least one of the following data: a control instruction and gimbal upgrade data. It should be noted that the image data and the photographing device upgrade data are not transmitted through the first communication link because amounts of the image data and the photographing device upgrade data are far greater than the amounts of the control instruction and the gimbal upgrade data. If transmitted through the first communication link, the image data and the photographing device upgrade data may occupy a large bandwidth, causing congestion of the first communication link, and consequently, the control instruction cannot be transmitted normally. However, the gimbal upgrade data is small, and will not cause congestion of the first communication link. Certainly, types of the first communication link and the second communication link are not limited to the foregoing examples either. Likewise, data transmitted on each communication link is not limited to the foregoing examples either. In addition, the second communication link may not be limited to being connected to the photographing device either, but certainly may be connected to other devices.

More specifically, on the basis of the foregoing embodiment, the method in this embodiment may include:
when the second control circuit 42 receives second data of the photographing device 61 that is sent by the control device, the second control circuit 42 sends the second data to the photographing device 61 through the second communication link; and
when the second control circuit 42 receives first data of the gimbal 62 that is sent by the control device, the second control circuit 42 sends the first data to the gimbal 62 through the first communication link.

In this embodiment, the second data may be specifically the photographing device upgrade data, and the first data may be specifically the control instruction or the gimbal upgrade data. When receiving the second data sent by the control device, the second control circuit 42 sends the second data to the photographing device 61 through the second communication link. More specifically, the second data may include type information of the photographing device 61. Before receiving the second data, the photographing device 61 may determine whether the type information matches; and if the type information matches, continue to receive the second data, and further perform a corresponding operation based on the second data, for example, upgrade the firmware of the photographing device 61 based on the second data. When the second control circuit 42 receives the first data, the second control circuit 42 sends the first data to the gimbal 62 through the first communication link. If the first data is a control instruction for the photographing device 61, the gimbal 62 transparently transmits the control instruction to the photographing device 61, or certainly, the control instruction for the photographing device 61 may be directly sent to the photographing device 61 through the first communication link. If the first data is a control instruction for the gimbal 62 or upgrade data for the gimbal, the first data is directly sent to the gimbal 62 through the first communication link, and the gimbal 62 performs a corresponding operation.

In the foregoing embodiment, the second control circuit 42 is configured to receive the first data or the second data sent by the control device. Therefore, the second control circuit 42 includes a wireless communication circuit configured to establish a wireless communication connection to the control device. Certainly, the second control circuit 42 may also include a wired communication circuit. For example, the upgrade data of the photographing device or the upgrade data of the gimbal 62 may be transmitted by the control device (such as a PC) through the wired communication circuit. Certainly, because the first control circuit 41 is communicatively connected to the second control circuit 42, a wireless communication circuit may also be disposed in the first control circuit 41.

In the foregoing embodiment, after receiving the data sent by the control device, the second control circuit 42 may determine whether the data is the first data or the second data, and therefore select different communication links. Therefore, the second control circuit 42 includes a routing circuit configured to forward communication signals, so that the communication signals are forwarded through different communication links.

On the basis of any one of the foregoing embodiments, the second control circuit 42 further includes a power management circuit configured to control power supply for the gimbal 62 and the photographing device.

In this embodiment, the power management circuit is configured to control power supply for the gimbal 62 and a camera, including switching of power supply, power control, status detection, and the like for different loads 60. In addition, the power management circuit may also control interlink and association of a plurality of loads 60.

The load control method provided in the foregoing embodiment includes: receiving a control instruction sent by a control device corresponding to the mobile platform, where the control instruction includes original identification information of a load; determining, based on the original identification information of the load, a hardware port connected to the load; modifying, based on the determined hardware port connected to the load, the original identification information of the load in the control instruction to target identification information identifiable by the hardware port; and sending the modified control instruction to the load through the hardware port. For a plurality of loads carried by the mobile platform, real-time, stable, and reliable switching and control can be implemented, and the scalability of the mobile platform is improved. If a device needs to be added at a hardware port or a hardware port needs to be directly added later on, only original identification information of a load and target identification information identifiable by the hardware port needs to be configured. Therefore, software changes may be reduced, an increase of the quantity of load does not cause instability or brings about limitations, and development and maintenance costs may be reduced.

Certainly, switching and control for different loads are implemented not merely by using the hardware port in each of the foregoing embodiments; switching and control for different loads may also be implemented by using a virtual private protocol port, a user-defined network port, a VID (Vendor ID) in USB (Universal Serial BUS) hardware, and a PID (Product ID).

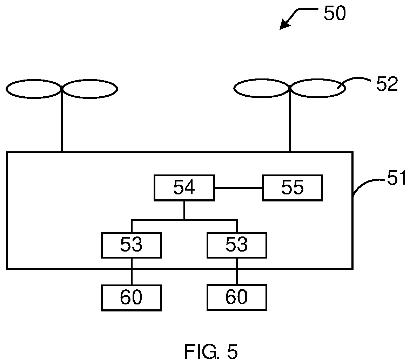

An embodiment of the present invention provides a mobile platform. FIG. 5 is a structural diagram of a mobile platform according to an embodiment of the present invention. As shown in FIG. 5, the mobile platform 50 includes:
a body 51;
a power system 52, mounted in the body 51, and configured to supply power;
a plurality of hardware ports 53, where the hardware ports 53 are configured to connect to loads 60;
a communication interface 55, configured to communicate with a control device corresponding to the mobile platform; and
one or more processors 54, configured to:
   receive, through the communication interface 55, a control instruction sent by the control device corresponding to the mobile platform 50, where the control instruction includes original identification information of a load 60;
   determine, based on the original identification information of the load 60, a hardware port 53 connected to the load 60;
   modify the original identification information of the load 60 in the control instruction to target identification information identifiable by the hardware port 53; and
   send the modified control instruction to the load 60 through the hardware port 53.

On the basis of any one of the foregoing embodiments, the load 60 includes at least one of the following devices:
a gimbal, a photographing device, and a gimbal electronic speed control.

On the basis of any one of the foregoing embodiments, the hardware port 53 is communicatively connected to each of the at least one device.

On the basis of any one of the foregoing embodiments, a link identification of a communication link between the hardware port 53 and each device is different from a link identification of a communication link between the hardware port 53 and another device.

On the basis of any one of the foregoing embodiments, the devices of the same type have the same target identification information.

On the basis of any one of the foregoing embodiments, the processor 54 is further configured to:
receive, through the hardware port 53, data sent by the load 60, where the data includes the target identification information of the load 60;
modify the target identification information of the load 60 in the data to the original identification information of the load 60; and
send the modified data to the control device through the communication interface 55.

On the basis of any one of the foregoing embodiments, before receiving, through the communication interface 55, the control instruction sent by the control device corresponding to the mobile platform 50, the processor 54 is further configured to:
obtain type information of a load 60 connected to each hardware port 53 in the plurality of hardware ports 53; and
send, to the control device through the communication interface 55, type information of the load 60 connected to the hardware port 53, so that the control device displays, based on the type information of the load 60, a user interface corresponding to the type information.

On the basis of any one of the foregoing embodiments, the original identification information of the load 60 is used to identify the type information of the load 60.

On the basis of any one of the foregoing embodiments, the mobile platform 50 includes a first control circuit and a second control circuit, and the first control circuit is communicatively connected to the second control circuit;
the first control circuit is communicatively connected to the plurality of hardware ports 53, forming a first communication link;
the second control circuit is communicatively connected to the photographing device, forming a second communication link;
when the second control circuit receives second data of the photographing device that is sent by the control device, the second control circuit sends the second data to the photographing device through the second communication link; and
when the second control circuit receives first data of the gimbal that is sent by the control device, the second control circuit sends the first data to the gimbal through the first communication link.

On the basis of any one of the foregoing embodiments, the second communication link is a USB interface communication link.

On the basis of any one of the foregoing embodiments, the second communication link is configured to transmit at least one of the following data: image data and photographing device upgrade data.

On the basis of any one of the foregoing embodiments, the first communication link is a serial port communication link.

On the basis of any one of the foregoing embodiments, the first communication link is configured to transmit at least one of the following data: a control instruction and gimbal upgrade data.

On the basis of any one of the foregoing embodiments, the first control circuit includes a wireless communication circuit configured to establish a wireless communication connection to the control device of the mobile platform 50.

On the basis of any one of the foregoing embodiments, the second control circuit includes a routing circuit configured to forward communication signals.

On the basis of any one of the foregoing embodiments, the second control circuit further includes a power management circuit configured to control the power supply for the gimbal and the photographing device.

On the basis of any one of the foregoing embodiments, the mobile platform 50 includes an unmanned aerial vehicle.

Specific principles and implementations of the mobile platform provided in this embodiment of the present invention are similar to those in the foregoing embodiment. Details are not described again herein.

The mobile platform provided in this embodiment receives a control instruction sent by a control device corresponding to the mobile platform, where the control instruction includes original identification information of a load; determines, based on the original identification information of the load, a hardware port connected to the load; modifies, based on the determined hardware port connected to the load, the original identification information of the load in the control instruction to target identification information identifiable by the hardware port; and sends the modified control instruction to the load through the hardware port. In this embodiment of the present invention, for a plurality of loads carried by the mobile platform, real-time, stable, and reliable switching and control may be realized, and the scalability of the mobile platform is improved. If a device needs to be added at a hardware port or a hardware port needs to be directly added later on, only original identification information of a load and target identification information identifiable by the hardware port needs to be configured. Therefore, software changes are reduced, an increase of the quantity of load does not cause instability or brings about limitations, and development and maintenance costs are reduced.

In addition, this embodiment further provides a computer-readable storage medium, where the computer-readable storage medium stores a computer program, and the computer program is executed by a processor to implement the load control method in the foregoing embodiment.

In the several embodiments provided in the present invention, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network elements. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware or may be implemented in a form of hardware in addition to a software functional unit.

When the foregoing integrated unit is implemented in the form of a software functional unit, the integrated unit may be stored in a computer-readable storage medium. The software functional unit is stored in a storage medium and includes several instructions for instructing a computer device (which may be a personal computer, a server, a network device, or the like) or a processor to perform a part of the steps of the methods described in the embodiments of the present invention. The foregoing storage medium includes any medium that can store program code, such as a USB flash drive, a removable hard disk, a read-only memory (ROM), a random access memory (RAM), a magnetic disk, or an optical disc.

It may be clearly understood by persons skilled in the art that, for the purpose of convenient and brief description, division of the foregoing functional modules is used as an example for illustration. In actual application, the foregoing functions can be allocated to different functional modules and implemented according to a requirement, that is, an internal structure of the apparatus is divided into different functional modules to implement all or a part of the functions described above. For a detailed working process of the foregoing apparatus, reference may be made to a corresponding process in the foregoing method embodiments, and details are not described again herein.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A load control method applied to a mobile platform having a plurality of hardware ports for connecting to loads, **characterized in that**, the method comprises:
receiving a control instruction sent by a control device corresponding to the mobile platform, wherein the control instruction includes original identification information of a load;
determining, based on the original identification information of the load, a hardware port connected to the load;
modifying, based on the determined hardware port connected to the load, the original identification information of the load in the control instruction to target identification information identifiable by the hardware port; and
sending the modified control instruction to the load through the hardware port.

2. The method according to claim 1, **characterized in that**, the load includes at least one device of the following devices:
a gimbal, a photographing device, and a gimbal electronic speed control.

3. The method according to claim 2, **characterized in that**, the hardware ports are communicatively connected to each of the at least one device, respectively.

4. The method according to claim 3, **characterized in that**, a link identification of a communication link between the hardware port and one device is different from a link identification of a communication link between the hardware port and another device.

5. The method according to any one of claims 2 to 4, **characterized in that**, the devices of a same type have same target identification information.

6. The method according to any one of claims 1 to 5, **characterized in that**, the method further comprises:
receiving data sent by the load, wherein the data includes the target identification information of the load;
modifying the target identification information of the load in the data to the original identification information of the load; and
sending the modified data to the control device.

7. The method according to claim 1, **characterized in that**, before the receiving a control instruction sent by a control device corresponding to the mobile platform, the method further comprises:
obtaining type information of a load connected to each hardware port of the plurality of hardware ports; and
sending the type information of the load connected to the hardware port to the control device, so that the control device displays, based on the type information of the load, a user interface corresponding to the type information.

8. The method according to claim 7, **characterized in that**, the original identification information of the load is used to identify the type information of the load.

9. The method according to claim 2, **characterized in that**, the mobile platform includes a first control circuit and a second control circuit, and the first control circuit is communicatively connected to the second control circuit;
the first control circuit is communicatively connected to the plurality of hardware ports, forming a first communication link;
the second control circuit is configured to communicatively connected to the photographing device, forming a second communication link; and
the method further comprises:
when the second control circuit receives second data of the photographing device that is sent by the control device, sending, by the second control circuit, the second data to the photographing device through the second communication link; and
when the second control circuit receives first data of the gimbal that is sent by the control device, sending, by the second control circuit, the first data to the gimbal through the first communication link.

10. The method according to claim 9, **characterized in that**, the second communication link is a USB interface communication link.

11. The method according to claim 9 or 10, **characterized in that**, the second communication link is configured to transmit at least one of the following data: image data and photographing device upgrade data.

12. The method according to claim 9, **characterized in that**, the first communication link is a serial port communication link.

13. The method according to claim 9 or 12, **characterized in that**, the first communication link is configured to transmit at least one of the following data: a control instruction and gimbal upgrade data.

14. The method according to any one of claims 9 to 13, **characterized in that**, the second control circuit includes a wireless communication circuit configured for wireless communication connection to the control device of the mobile platform.

15. The method according to any one of claims 9 to 14, **characterized in that**, the second control circuit includes a routing circuit configured to forward communication signals.

16. The method according to any one of claims 9 to 15, **characterized in that**, the second control circuit further includes a power management circuit configured to control power supply for the gimbal and the photographing device.

17. The method according to any one of claims 1 to 16, **characterized in that**, the mobile platform includes an unmanned aerial vehicle.

18. A mobile platform, **characterized in that**, comprising:
a body;
a power system, mounted in the body, and configured to supply power;
a plurality of hardware ports, wherein the hardware ports are configured to connect to loads;
a communication interface, configured to communicate with a control device corresponding to the mobile platform; and
one or more processors, configured to:
receive, through the communication interface, a control instruction sent by the control device corresponding to the mobile platform, wherein the control instruction includes original identification information of a load;
determine, based on the original identification information of the load, a hardware port connected to the load;
modify the original identification information of the load in the control instruction to target identification information identifiable by the hardware port; and
send the modified control instruction to the load through the hardware port.

19. The mobile platform according to claim 18, **characterized in that**, the load includes at least one device of the following devices:
a gimbal, a photographing device, and a gimbal electronic speed control.

20. The mobile platform according to claim 19, **characterized in that**, the hardware ports are communicatively connected to each of the at least one device, respectively.

21. The mobile platform according to claim 20, **characterized in that**, a link identification of a communication link between the hardware port and one device is different from a link identification of a communication link between the hardware port and another device.

22. The mobile platform according to any one of claims 19 to 21, **characterized in that**, the devices of a same type have same target identification information.

23. The mobile platform according to any one of claims 18 to 22, **characterized in that**, the processor is further configured to:
through the hardware port, data sent by the load, wherein the data include the target identification information of the load;
modify the target identification information of the load in the data to the original identification information of the load; and
send the modified data to the control device through the communication interface.

24. The mobile platform according to claim 18, **characterized in that**, before receiving, through the communication interface, the control instruction sent by the control device corresponding to the mobile platform, the processor is further configured to:
obtain type information of a load connected to each hardware port of the plurality of hardware ports; and
send, to the control device through the communication interface, type information of the load connected to the hardware port, so that the control device displays, based on the type information of the load, a user interface corresponding to the type information.

25. The mobile platform according to claim 24, **characterized in that**, the original identification information of the load is used to identify the type information of the load.

26. The mobile platform according to claim 19, **characterized in that**, the mobile platform includes a first control circuit and a second control circuit, and the first control circuit is communicatively connected to the second control circuit;
the first control circuit is communicatively connected to the plurality of hardware ports, forming a first communication link;
the second control circuit is configured to communicatively connect to the photographing device, forming a second communication link;
when the second control circuit receives second data of the photographing device that is sent by the control device, the second control circuit sends the second data to the photographing device through the second communication link; and
when the second control circuit receives first data of the gimbal that is sent by the control device, the second control circuit sends the first data to the gimbal through the first communication link.

27. The method according to claim 26, **characterized in that**, the second communication link is a USB interface communication link.

28. The method according to claim 26 or 27, **characterized in that**, the second communication link is configured to transmit at least one of the following data: image data and photographing device upgrade data.

29. The method according to claim 26, **characterized in that**, the first communication link is a serial port communication link.

30. The method according to claim 26 or 29, **characterized in that**, the first communication link is configured to transmit at least one of the following data: a control instruction and gimbal upgrade data.

31. The method according to any one of claims 26 to 30, **characterized in that**, the second control circuit includes a wireless communication circuit configured for wireless communication connection to the control device of the mobile platform.

32. The method according to any one of claims 26 to 31, **characterized in that**, the second control circuit includes a routing circuit configured to forward communication signals.

33. The method according to any one of claims 26 to 32, **characterized in that**, the second control circuit further includes a power management circuit configured to control power supply for the gimbal and the photographing device.

34. The mobile platform according to any one of claims 18 to 33, **characterized in that**, the mobile platform comprises an unmanned aerial vehicle.

35. A computer-readable storage medium, **characterized in that**, the computer-readable storage medium stores a computer program, and the computer program is executed by a processor to implement the method according to any one of claims 1 to 17.
